# EUROPEAN PATENT SPECIFICATION

(11) **EP 2 329 558 B1**
(45) Date of publication and mention of the grant of the patent: **22.07.2015**
(21) Application number: 09789987.6
(22) Date of filing: 30.06.2009
(51) Int. Cl.: H01M 10/0525, H01M 10/0567, H01M 10/42, H01M 10/44

(54) **LITHIUM ION BATTERY PACK CHARGING SYSTEM AND DEVICE INCLUDING THE SAME**
LITHIUMIONEN-BATTERIEPACK-LADESYSTEM UND EINRICHTUNG DAMIT
SYSTÈME DE CHARGE DE BLOC BATTERIE LITHIUM-ION ET DISPOSITIF LE COMPRENANT

(30) Priority: 30.07.2008 US 182531
(43) Date of publication of application: 08.06.2011
(73) Proprietor: 3M Innovative Properties Company, Saint Paul, MN 55133-3427 (US)
(72) Inventor: JIANG, Junwei, Saint Paul, MN 55133-3427 (US); MAGNUSON, Douglas C., Saint Paul, Minnesota 55133-3427 (US); LAMANNA, William M., Saint Paul, Minnesota 55133-3427 (US); PHAM, Phat T., Saint Paul, Minnesota 55133-3427 (US)
(74) Representative: Isarpatent
(86) International application number: PCT/US2009/049157
(87) International publication number: WO 2010/014332

(56) References cited:
- US-A- 5 744 937

## Description

### FIELD

The present disclosure relates broadly to systems for charging lithium ion battery packs.

### BACKGROUND

When properly designed and constructed, rechargeable lithium ion cells typically provide high energy content in a relatively small and lightweight device. Moreover, rechargeable lithium ion cells, and battery packs containing multiple lithium ion cells typically exhibit excellent charge-discharge cycle life with little or no hysteresis. However, lithium ion cells can have some shortcomings, including an inability to tolerate charging to potentials above the manufacturer's recommended end of charge potential without degradation in cycle life and/or cell failure, and difficulties in making large cells with sufficient tolerance to electrical and mechanical abuse for consumer applications.

Single and connected (for example, series-connected) lithium ion cells typically incorporate charge control electronics to prevent individual cells from exceeding the recommended end of charge potential and to maintain charge balance between cells. This circuitry adds cost and complexity and has discouraged the use of lithium ion cells and batteries in low end electrical and electronic devices such as computers, flashlights, power tools, and even in motor vehicles, where the number of lithium ion cells may exceed one hundred.

The recent development of redox shuttles suitable for use in lithium ion batteries allows improvement of the performance of lithium ion batteries. The term "redox shuttle" refers to a material that can provide oxidizable and reducible charge-transporting species that repeatedly transport charge between the negative and positive terminals of a lithium ion cell once the state of charge of the lithium ion cell reaches a desired value, typically corresponding to the lithium ion cell being fully charged. Although it is practical to use redox shuttles at relatively low overcharge charge rates, it is typically desirable that battery packs be chargeable at relatively high rates. Power dissipation at a high rate tends to create elevated temperatures which can shorten the service life.

U.S. Patent No. 5,744,937 is directed to a dual battery charging device for charging two different types of rechargeable batteries including a battery connector which connects with the battery, a charge circuit which supplies a charge current and a charge voltage to the battery connector to charge a battery, and a sensing controller which senses a temperature and a type of the battery and controls the charge current and the charge voltage output from the charge circuit according to the temperature and the type of the battery. Consequently, the patent contemplates that either a NiMH battery or a lithium-ion battery can be charged by using a single dual battery charging device.

It is common practice to use individual cell charge control circuitry with lithium ion battery packs including lithium ion cells that are not shuttle equipped. Monitoring individual lithium ion cells adds to the expense and complexity of battery packs with a high number of such cells arranged in series. An example is a large battery pack made for use in electric vehicle and/or hybrid electric vehicles.

Another technical challenge for large battery pack design is a state of charge imbalance between individual cells in a series string. This is caused most frequently by small faults in construction among cells in the battery pack. In general, such cell capacity imbalance adversely impacts battery pack cycling performance.

### SUMMARY

In one aspect, the present disclosure provides a lithium ion battery pack charging system comprising: a lithium ion battery pack having positive and negative terminals, the lithium ion battery pack comprising a plurality of lithium ion cells connected in series and in electrical communication with the positive and negative terminals, each of the plurality of lithium ion cells comprising an anode, a cathode, and an electrolyte composition, wherein the electrolyte composition comprises a redox shuttle and a lithium salt at least partially dissolved in solvent; a charger in electrical communication with the positive and negative terminals, the charger is configured to charge the lithium ion battery pack at at least a first charge rate and a second charge rate, wherein the second charge rate is greater than zero and less than the first charge rate; and a charger controller in electrical communication with the charger, wherein the charger controller is configured to monitor a voltage difference between the positive and negative terminals, calculating a rate of change of the voltage difference, and, depending at least in part on at least one of the voltage difference or the rate of change of the voltage difference, changing the first charge rate to the second charge rate.

In some embodiments, individual lithium ion cells of the plurality of lithium ion cells have a maximum difference in cell capacity of thirty percent, and wherein the lithium ion battery pack charging system is configured to charge the lithium ion battery pack at the second charge rate without stopping. In some embodiments, individual lithium ion cells of the

a charger in electrical communication with the positive and negative terminals, the charger being capable of charging the lithium ion battery pack at at least a first charge rate and a second charge rate, wherein the second charge rate is greater than zero and less than the first charge rate; and
a charger controller in electrical communication with the charger, wherein the charger controller is capable of monitoring a voltage difference between the positive and negative terminals, calculating a rate of change of the voltage difference, and, depending at least in part on at least one of the voltage difference or the rate of change of the voltage difference, changing the first charge rate to the second charge rate.

In some embodiments, individual lithium ion cells of the plurality of lithium ion cells have a maximum difference in cell capacity of thirty percent, and wherein the lithium ion battery pack charging system is configured to charge the lithium ion battery pack at the second charge rate without stopping. In some embodiments, individual lithium ion cells of the plurality of lithium ion cells have a maximum difference in cell capacity of thirty percent, and wherein the lithium ion battery pack charging system is configured to charge the lithium ion battery pack at the second charge rate for a predetermined period of time. In certain of these embodiments, the lithium ion battery pack charging system is configured to turn off after the predetermined period of time. In certain embodiments, the second charge rate is sufficient to charge the lithium ion cells in the predetermined period of time; for example, not more than two hours. In some embodiments, the charger controller is integrally combined with the charger.

In some embodiments, depending on the voltage difference, the charger controller is capable of changing the first charge rate to the second charge rate. In some embodiments, depending on the rate of change of the voltage difference, the charger controller is capable of changing the first charge rate to the second charge rate. In some embodiments, the charger controller is further capable of monitoring a temperature of at least a portion of the lithium ion battery pack, and depending at least in part on at least one of the voltage difference or the rate of change of the voltage difference, and the temperature of the at least a portion of the lithium ion battery pack, changing the first charge rate to the second charge rate. In some embodiments, the charger controller is further capable of monitoring a temperature of at least a portion of the lithium ion battery pack, and calculating a rate of change of the temperature of the at least a portion of the lithium ion battery pack, and depending at least in part on at least one of the voltage difference or the rate of change of the voltage difference, and the rate of change of the temperature of the at least a portion of the lithium ion battery pack, changing the first charge rate to the second charge rate. In some embodiments, the redox shuttle comprises 1,4-di-t-butyl-2,5-dimethoxybenzene, and the electrolyte composition comprises ethylene carbonate, diethyl carbonate, ethyl methyl carbonate, and lithium hexafluorophosphate.

In another aspect, the present disclosure provides a device comprising a lithium ion battery pack charging system according to the present disclosure. In some embodiments, the redox shuttle comprises 1,4-di-t-butyl-2,5-dimethoxybenzene, and the electrolyte composition comprises ethylene carbonate, diethyl carbonate, ethyl methyl carbonate, and lithium hexafluorophosphate.

Advantageously, lithium ion battery pack charging systems according to the present disclosure eliminate the need for supervisory circuitry presently included in lithium ion battery packs to monitor individual cell voltages. Further, lithium ion battery pack charging systems according to the present disclosure are especially useful for charging (and recharging) lithium ion battery packs having unbalanced lithium ion cells.

As used herein,
"rate" refers to a rate with respect to time unless otherwise specified.

### BRIEF DESCRIPTION OF THE DRAWING

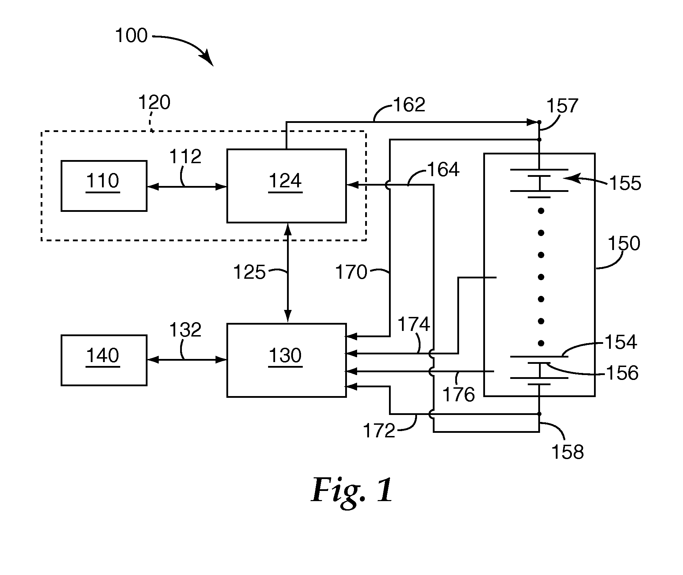

Fig. 1 is a block diagram of an exemplary lithium ion battery pack charging system according to the present disclosure.

### DETAILED DESCRIPTION

Referring now to Fig. 1, exemplary lithium ion battery pack charging system 100 according to the present disclosure comprises lithium ion battery pack 150 having positive terminal 157 and negative terminal 158. As shown, lithium ion battery pack 150 comprises a plurality of lithium ion cells 155 connected in series and in electrical communication with positive and negative terminals (157, 158). Each of the plurality of lithium ion cells 155 comprises an anode (154), a cathode (156), and an electrolyte composition (not shown).

Charger 120 comprises power supply 110 (for example, an AC adapter) in electrical communication with charge management integrated circuit (IC) 124 through first circuit 112. Charger 120 is in electrical communication with the positive and negative terminals (157, 158). Charger 120 is capable of charging lithium ion battery pack 150 at a first charge rate and a second charge rate that is greater than zero and less than the first charge rate.

Charger controller 130 is in electrical communication via second circuit 125 with charger 120 via charge management integrated circuit 124. Charger controller 130 is in electrical communication with optional display unit 140 (for example, and LED display) through third circuit 132. Charger controller 130 is capable of dynamically monitoring (for example, during charging of the lithium ion battery pack 150) the voltage difference between positive and negative terminals (157, 158) through fourth and fifth circuits (170, 172) and determining a rate of change of the voltage difference, and based at least in part on the voltage difference or its rate of change, changing the first (higher) charge rate to the second (lower) charge rate.

Optionally, charger controller 130 is capable of receiving information concerning the temperature of one or more regions of the lithium ion battery pack through sixth and seventh circuits 174, 176. Based on the received temperature information and/or the rate of change of the that information, the charger controller may change the charge rate of the charger 120 to one or more other levels (typically lower), including in some cases reducing the charge rate to zero.

In operation, constant current is supplied to the lithium ion battery pack at the relatively higher first rate until at least one cell begins to shuttle. The onset of shuttling is associated with a rise in the voltage difference between the positive and negative terminals of the lithium ion battery pack, typically to a predetermined voltage range. Accordingly, either the rate of increase in voltage difference or the actual voltage difference may be used to determine when shuttling occurs, and hence when the charge rate should be changed to the second (lower) charge rate. In addition to monitoring the voltage difference between the positive and negative terminals, the temperature of one or more regions within the lithium ion battery pack may also be monitored; for example, as a backup and/or as an indicator of lithium ion battery pack failure. For example, the charger may be configured to further reduce, or stop, the charge rate in response to a rise in the lithium ion battery pack internal temperature (for example, either the rate of the measured temperature rise, or the measured temperature).

The lithium ion battery pack comprises at least two lithium ion cells having redox shuttles connected in series. Optionally, it may contain additional lithium ion cells that are connected in parallel. The lithium ion battery pack may, for example, be substantially contained within a housing or the positive and negative terminals may serve to substantially contain the lithium ion cells.

The lithium ion cells are typically selected to have the same capacity subject to cell variability. Small faults with any given cell can cause that cell to lose charge and create a state of charge less than its series connected neighbors. Differences may tend to accentuate over time, however, nominally identical lithium ion cells generally exhibit some variation in capacity, especially after extended use. Such variation in capacity is typically less than 30 percent, more typically less than 20 or even less than 10 percent; however, it can be larger. This issue creates a need for rebalancing the lithium ion cells. Once the lithium ion cells are all charged to their maximum state of charge the lithium ion battery pack will then deliver the most energy upon discharge. Lithium ion cells that are capable of shuttling are therefore a key element in the charging system.

Lithium ion cells may be made, for example, by taking at least one each of a cathode and an anode (for example, as described hereinbelow) and contacting them with an electrolyte composition. A microporous separator, such as CELGARD 2400 microporous material, available from Celgard of Charlotte, NC, may be used to prevent the contact of the anode directly with the cathode.

The cathode (positive electrode) may be made from an electrode composition including, for example: LiMn₂O₄; LiFePO₄; LiCoO₂; mixed metal oxides of cobalt, manganese, and nickel such as those described in U. S. Pat. Nos. 6,964,828 B2 (Lu et al.) and 7,078,128 B2 (Lu et al.); and nanocomposite cathode compositions such as those described in U. S. Pat. No. 6,680,145 B2 (Obrovac et al.). Other cathodes suitable for use in lithium ion electrochemical cells may also be used. Typically, the foregoing compositions are combined (for example, using pressure) with a binder and optional additional additives such as will be familiar to those skilled in the art. The cathode may contain additives as will be familiar to those skilled in the art, for example, carbon black, flake graphite and the like. As will be appreciated by those skilled in the art, the cathode may be in any convenient form including foils, plates, rods, pastes or as a composite made by forming a coating of the cathode material on a conductive current collector or other suitable support.

For example, the cathode composition may include an electrically conductive diluent to facilitate electron transfer from the powdered material to a current collector. Electrically conductive diluents include, but are not limited to, carbon (for example, carbon black for anodes and carbon black, flake graphite and the like for cathodes), metal, metal nitrides, metal carbides, metal silicides, and metal borides. Representative electrically conductive carbon diluents include carbon blacks such as SUPER P and SUPER S carbon blacks (both from MMM Carbon, Belgium), SHAWANIGAN BLACK (Chevron Chemical Co. of Houston, TX), acetylene black, furnace black, lamp black, graphite, carbon fibers, single-walled carbon nanotubes, multiple-walled carbon nanotubes, and combinations thereof.

The anode (negative electrode) may be made from compositions that include lithium, carbonaceous materials, silicon alloy compositions and lithium alloy compositions. Exemplary carbonaceous materials include synthetic graphites such as mesocarbon microbeads (MCMB) (available from E-One Moli/Energy Canada Ltd., Vancouver, BC, Canada), SLP30 (available from TimCal Ltd., Bodio, Switzerland), natural graphites and hard carbons. Useful anode materials also include alloy powders or thin films. Such alloys may include electrochemically active components such as silicon, tin, aluminum, gallium, indium, lead, bismuth, and zinc and may also comprise electrochemically inactive components such as iron, cobalt, transition metal silicides and transition metal aluminides.

Lithium salt(s) suitable for use in lithium ion cells are well known in the art and should generally be selected so that they do not appreciably degrade during use in a lithium-ion battery. Exemplary lithium salt(s) include LiPF₆, LiBF₄, LiClO₄, lithium bis(oxalate)borate, LiN(SO₂CF₃)₂, LiN(SO₂C₂F₅)₂, LiAsF₆, LiC(SO₂CF₃)₃, LiB(C₆H₅)₄, LiO₃SCH₃, LiO₃SCF₃, LiCl, LiBr, and combinations thereof.

As used herein, the term "solvent" refers to one or more compounds that collectively dissolve at least a portion of the lithium salt. In general, the solvent is homogeneous, although a minor amount of phase separation may be acceptable under some circumstances. The solvent may be a liquid, gel, or solid; typically liquid. In general, compounds used in the solvent should be inert to normal operating conditions in the lithium ion cell. Exemplary solvents include: glycol ethers such as 1,2-dimethoxyethane and 1,2-diethoxyethane; lactones such as γ-butyrolactone and valerolactone; cyclic ethers such as tetrahydrofuran, 2-methyltetrahydrofuran, 1,3-dioxolane, and 4-methyl-1,3-dioxolane; sulfones such as sulfolane and methylsulfolane; carbonates such as ethylene carbonate, propylene carbonate, butylene carbonate, vinylene carbonate, dimethyl carbonate, diethyl carbonate, ethyl methyl carbonate, and vinylethylene carbonate. Additional solvents are disclosed in commonly-assigned U. S. Pat. Appl. No. 12/181,625 (Pham et al.), filed July 29, 2008.

Exemplary electrolyte compositions include those comprising lithium hexafluorophosphate, ethylene carbonate, diethyl carbonate, and ethyl methyl carbonate, in a weight ratio of 13:13:26:48, respectively.

Any redox shuttle suitable for use in lithium ion cells may be used. Typically, the redox shuttle is selected to operate at a voltage that is 0.1 to 0.6 volts above the voltage of the positive electrode at a desired state of charge, although this is not a requirement. Useful redox shuttles may include, for example, various metallocenes, tetracyanoethylene, tetramethylphenylenediamine, dihydrophenazine derivatives bearing either 2-hydroxypropyl or ethyl substituents on both N atoms, and various substituted aromatic (for example, 2,5-di-tert-butyl-1,4-dimethoxybenzene, hexaethylbenzene, biphenyl, difluoroanisole), and heterocyclic compounds (for example, bipyridyl, thianthrene, 2,7-diacetyl thianthrene, and certain phenothiazine based compounds). Additional useful redox shuttles may include those described in U. S. Pat. Nos. 5,709,968 (Shimizu); 5,763,119 (Adachi), 5,536,599 (Alamgir et al.), 5,858,573 (Abraham et al.), 5,882,812 (Visco et al.), 6,004,698 (Richardson et al.), 6,045,952 (Kerr et al.), and 6,387,571 B1 (Lain et al.); and in U. S. Pat. Appl. Publ. Nos. 2005/0221168 A1, 2005/0221196 A1, 2006/0263696 A1, and 2006/0263697 A1 (each to Dahn et al.).

The capacity of a cell (cell capacity) is a measure of the amount of energy that it can deliver in a single discharge. Cell capacity is normally listed in units of ampere-hours. The term "C" is commonly used to signify a charge (or discharge) rate equal to the cell capacity divided by 1 hour. For example, C for a 1.6 ampere-hour battery would be 1.6 amperes.

In terms of cell charging, C is equal to the charger current output divided by the cell capacity. For example, if a 4 ampere-hour cell is charged by a 2 ampere charger, the charge rate is 0.5C. Likewise, if a two ampere charger is used to charge a twenty ampere-hour cell, then the battery charge rate is 0.1C.

Typically, the charger delivers a substantially constant current at discrete level(s), which may be a single level or multiple different levels. For example, it may deliver a substantially constant higher current at the first charge rate (for example, fast-charging), and a substantially constant lower current at the second charge rate (for example, slow-charging). In some embodiments, the charger may not deliver substantially constant current at each discrete level (for example, the current may vary significantly within specified upper and lower bounds for one or more of the charging levels). Chargers capable of charging a multiple discrete charge rates (for example, a high charge rate and a low rate) are well known in the art and widely available from commercial sources

Typically, the charge rates are adapted for a specific lithium ion battery pack, although the charger may have multiple independent operating modes, each adapted for a different lithium ion battery pack type and/or configuration. Typically, the first charge rate is in a range of from about C/10 to at least about 2C for the same lithium ion battery pack; for example, in a range of from about C/2 to about 2C, although other values may also be used. Likewise, the second charge rate is typically in a range of from about C/30 to about C/10 for a given lithium ion battery pack; for example, in a range of from about C/20 to about C/10, although other values may also be used.

For example, the lithium ion battery pack charging system may be configured such that, once switched to the second charging rate, charging continues for a predetermined period of time (for example, about 10, 20, 30, 60, or 90 minutes or about 2, 3, 4, 5, 6, 12, or even about 24 hours) or charging may be continued until a triggering event such as a temperature rise or voltage increase occurs that causes the charger controller to shut off the charger. If desired, charging at the second charge rate may be continued indefinitely subject to manual termination. Typically, the period of time will be specified such that upon its conclusion the battery is substantially fully charged.

The charger may be a standalone unit or several electrically connected components. For example, the charger may comprise an AC adapter electrically connected to a charge management integrated circuit (IC) capable of managing current delivered by the AC adapter to the lithium ion battery pack, as shown in Fig. 1. Examples of useful charge management integrated circuits include those marketed by Texas Instruments, Inc. of Dallas, TX, as BQ24100, BQ24103, BQ24103A, BQ24105, BQ24108, BQ24109, BQ24113, BQ24113A, and BQ24115.

Likewise, the charger controller may be a standalone unit or several electrically connected components. For example, the charger controller may comprise a mixed signal microcontroller integrated chip. Examples of suitable such mixed signal microcontrollers include those marketed by chips include management integrated circuits include those marketed by Texas Instruments as MSP430X20X1, MSP430X20X2, and MSP430X20X3.

Lithium ion battery pack charging systems according to the present disclosure may be included in a variety of devices, including, for example, portable computers, tablet displays, toys, personal digital assistants, mobile telephones, motorized devices (for personal or household appliances and motor vehicles), instruments, illumination devices (for example, flashlights), and heating devices.

## Claims

1. A lithium ion battery pack charging system comprising:
a lithium ion battery pack having positive and negative terminals, the lithium ion battery pack comprising a plurality of lithium ion cells connected in series and in electrical communication with the positive and negative terminals, each of the plurality of lithium ion cells comprising an anode,
a cathode, and an electrolyte composition, wherein the electrolyte composition comprises a redox shuttle and a lithium salt at least partially dissolved in solvent;
a charger in electrical communication with the positive and negative terminals, wherein
the charger is configured to charge the lithium ion battery pack with constant current at least a first charge rate and a second charge rate, wherein the second charge rate is greater than zero and
less than the first charge rate, wherein the charger is configured to charge at the first rate until at least one of the lithium ion cells begins to shuttle; and
a charger controller in electrical communication with the charger, wherein the charger controller is configured to monitor a voltage difference between the positive and negative terminals, calculating a rate of change of the voltage difference, and, depending at least in part on at least one of the voltage difference or the rate of change of the voltage difference, changing the first charge rate to the second charge rate.

2. The lithium ion battery pack charging system of claim 1, wherein individual lithium ion cells of the plurality of lithium ion cells have a maximum difference in cell capacity of one hundred percent, and wherein the lithium ion battery pack charging system is configured to charge the lithium ion battery pack at the second charge rate without stopping.

3. The lithium ion battery pack charging system of claim 1, wherein individual lithium ion cells of the plurality of lithium ion cells have a maximum difference in cell capacity of one hundred percent, and wherein the lithium ion battery pack charging system is configured to charge the lithium ion battery pack at the second charge rate for a predetermined period of time.

4. The lithium ion battery pack charging system of claim 2, wherein the lithium ion battery pack charging system is configured to turn off after the predetermined period of time.

5. The lithium ion battery pack charging system of claim 3, wherein the second charge rate is sufficient to charge the lithium ion cells in the predetermined period of time.

6. The lithium ion battery pack charging system of claim 5, wherein the predetermined period of time is not more than two hours.

7. The lithium ion battery pack charging system of claim 1, wherein the charger controller is integrally combined with the charger.

8. The lithium ion battery pack charging system of claim 1, wherein depending on the voltage difference, the charger controller is configured to change the first charge rate to the second charge rate.

9. The lithium ion battery pack charging system of claim 1, wherein depending on the rate of change of the voltage difference, the charger controller is configured to change the first charge rate to the second charge rate.

10. The lithium ion battery pack charging system of claim 1, the charger controller is further configured to monitor a temperature of at least a portion of the lithium ion battery pack, and depending at least in part on at least one of the voltage difference or the rate of change of the voltage difference, and the temperature of the at least a portion of the lithium ion battery pack, changing the first charge rate to the second charge rate.

11. The lithium ion battery pack charging system of claim 1, the charger controller is further configured to monitor a temperature of at least a portion of the lithium ion battery pack, and calculating a rate of change of the temperature of the at least a portion of the lithium ion battery pack, and depending at least in part on at least one of the voltage difference or the rate of change of the voltage difference, and the rate of change of the temperature of the at least a portion of the lithium ion battery pack, changing the first charge rate to the second charge rate.

12. The lithium ion battery pack charging system of claim 1, wherein the redox shuttle comprises 1,4-di-t-butyl-2,5-dimethoxybenzene, and wherein the electrolyte composition comprises ethylene carbonate, diethyl carbonate, ethyl methyl carbonate, and lithium hexafluorophosphate.

13. A device comprising the lithium ion battery pack charging system of claim 1.

14. The device of claim 13, wherein the redox shuttle comprises 1,4-di-t-butyl-2,5-dimethoxybenzene, and wherein the electrolyte composition comprises ethylene carbonate, diethyl carbonate, ethyl methyl carbonate, and lithium hexafluorophosphate.

## Patentansprüche

1. Lithiumionen-Akkusatz-Ladesystem, umfassend:
einen Lithiumionen-Akkusatz, aufweisend positive und negative Pole, wobei der Lithiumionen-Akkusatz eine Vielzahl von Lithiumionen-Zellen umfasst, die in Reihe geschaltet ist und sich in elektrischer Kommunikation mit den positiven und negativen Polen befindet, wobei jede der Vielzahl von Lithiumionen-Zellen eine Anode, eine Kathode und eine Elektrolytzusammensetzung umfasst, wobei die Elektrolytzusammensetzung einen Redox-Shuttle und ein Lithiumsalz, das wenigstens teilweise in Lösungsmittel gelöst ist, umfasst;
ein Ladegerät, das sich in elektrischer Kommunikation mit den positiven und negativen Polen befindet, wobei
das Ladegerät dazu konfiguriert ist, den Lithiumionen-Akkusatz mit Konstantstrom mit wenigstens einer ersten Ladestromstärke und einer zweiten Ladestromstärke zu laden, wobei die zweite Ladestromstärke größer als null und kleiner als die erste Ladestromstärke ist, wobei das Ladegerät dazu konfiguriert ist, mit der ersten Stromstärke zu laden, bis mindestens eine der Lithiumionen-Zellen zu pendeln beginnt; und
eine Ladegerätsteuerung, die sich in elektrischer Kommunikation mit dem Ladegerät befindet, wobei die Ladegerätsteuerung dazu konfiguriert ist, einen Spannungsunterschied zwischen den positiven und negativen Polen zu überwachen, eine Änderungsrate des Spannungsunterschieds zu berechnen und, wenigstens teilweise in Abhängigkeit von wenigstens einem bzw. einer von dem Spannungsunterschied oder der Änderungsrate des Spannungsunterschieds, die erste Ladestromstärke in die zweite Ladestromstärke zu ändern.

2. Lithiumionen-Akkusatz-Ladesystem nach Anspruch 1, wobei einzelne Lithiumionen-Zellen der Vielzahl von Lithiumionen-Zellen eine maximale Differenz der Zellkapazität von einhundert Prozent aufweisen, und wobei das Lithiumionen-Akkusatz-Ladesystem dazu konfiguriert ist, den Lithiumionen-Akkusatz ohne Unterbrechung mit der zweiten Ladestromstärke zu laden.

3. Lithiumionen-Akkusatz-Ladesystem nach Anspruch 1, wobei einzelne Lithiumionen-Zellen der Vielzahl von Lithiumionen-Zellen eine maximale Differenz der Zellkapazität von einhundert Prozent aufweisen, und wobei das Lithiumionen-Akkusatz-Ladesystem dazu konfiguriert ist, den Lithiumionen-Akkusatz für einen vorher festgelegten Zeitraum mit der zweiten Ladestromstärke zu laden.

4. Lithiumionen-Akkusatz-Ladesystem nach Anspruch 2, wobei das Lithiumionen-Akkusatz-Ladesystem dazu konfiguriert ist, sich nach dem vorher festgelegten Zeitraum auszuschalten.

5. Lithiumionen-Akkusatz-Ladesystem nach Anspruch 3, wobei die zweite Ladestromstärke ausreicht, um die Lithiumionen-Zellen in dem vorher festgelegten Zeitraum zu laden.

6. Lithiumionen-Akkusatz-Ladesystem nach Anspruch 5, wobei der vorher festgelegte Zeitraum nicht mehr als zwei Stunden beträgt.

7. Lithiumionen-Akkusatz-Ladesystem nach Anspruch 1, wobei die Ladegerätsteuerung integral mit dem Ladegerät kombiniert ist.

8. Lithiumionen-Akkusatz-Ladesystem nach Anspruch 1, wobei die Ladegerätsteuerung in Abhängigkeit von dem Spannungsunterschied dazu konfiguriert ist, die erste Ladestromstärke in die zweite Ladestromstärke zu ändern.

9. Lithiumionen-Akkusatz-Ladesystem nach Anspruch 1, wobei die Ladegerätsteuerung in Abhängigkeit von der Änderungsrate des Spannungsunterschieds dazu konfiguriert ist, die erste Ladestromstärke in die zweite Ladestromstärke zu ändern.

10. Lithiumionen-Akkusatz-Ladesystem nach Anspruch 1, wobei die Ladegerätsteuerung ferner dazu konfiguriert ist, eine Temperatur wenigstens eines Teils des Lithiumionen-Akkusatzes zu überwachen und wenigstens teilweise in Abhängigkeit von wenigstens einem bzw. einer von dem Spannungsunterschied oder der Änderungsrate des Spannungsunterschieds und der Temperatur des wenigstens einen Teils des Lithiumionen-Akkusatzes die erste Ladestromstärke in die zweite Ladestromstärke zu ändern.

11. Lithiumionen-Akkusatz-Ladesystem nach Anspruch 1, wobei die Ladesteuerung ferner dazu konfiguriert ist, eine Temperatur wenigstens eines Teils des Lithiumionen-Akkusatzes zu überwachen und eine Änderungsrate der Temperatur des wenigstens einen Teils des Lithiumionen-Akkusatzes zu berechnen und wenigstens teilweise in Abhängigkeit von wenigstens einem bzw. einer von dem Spannungsunterschied oder der Änderungsrate des Spannungsunterschieds und der Änderungsrate der Temperatur des wenigstens einen Teils des Lithiumionen-Akkusatzes die erste Ladestromstärke in die zweite Ladestromstärke zu ändern.

12. Lithiumionen-Akkusatz-Ladesystem nach Anspruch 1, wobei der Redox-Shuttle 1,4-Di-t-butyl-2,5-dimethoxybenzol umfasst, und wobei die Elektrolytzusammensetzung Ethylencarbonat, Diethylcarbonat, Ethylmethylcarbonat und Lithiumhexafluorphosphat umfasst.

13. Vorrichtung, umfassend das Lithiumionen-Akkusatz-Ladesystem nach Anspruch 1.

14. Vorrichtung nach Anspruch 13, wobei der Redox-Shuttle 1,4-Di-t-butyl-2,5-dimethoxybenzol umfasst, und wobei die Elektrolytzusammensetzung Ethylencarbonat, Diethylcarbonat, Ethylmethylcarbonat und Lithiumhexafluorphosphat umfasst.

## Revendications

1. Système de charge pour bloc batterie lithium-ion, comprenant :
un bloc batterie lithium-ion possédant des bornes positive et négative, le bloc batterie lithium-ion comprenant une pluralité de cellules lithium-ion connectées en série et en communication électrique avec les bornes positive et négative, chacune parmi la pluralité de cellules lithium-ion comprenant une anode, une cathode et une composition d'électrolyte, dans lequel la composition d'électrolyte comprend une navette redox et un sel de lithium au moins partiellement dissous dans un solvant ;
un chargeur en communication électrique avec les bornes positive et négative, dans lequel le chargeur est conçu pour charger le bloc batterie lithium-ion avec un courant constant à au moins un premier régime de charge et un deuxième régime de charge,
dans lequel le deuxième régime de charge est supérieur à zéro et inférieur au premier régime de charge, dans lequel le chargeur est conçu pour charger au premier régime jusqu'à ce qu'au moins une des cellules lithium-ion commence à faire la navette ; et
un dispositif de commande de chargeur en communication électrique avec le chargeur,
dans lequel le dispositif de commande de chargeur est conçu pour surveiller une différence de tension entre les bornes positive et négative, calculer un taux de variation de la différence de tension et, en fonction au moins en partie d'au moins un parmi la différence de tension ou le taux de variation de la différence de tension, en remplacer le premier régime de charge par le deuxième régime de charge.

2. Système de charge pour bloc batterie lithium-ion selon la revendication 1, dans lequel les cellules lithium-ion individuelles de la pluralité de cellules lithium-ion ont une différence maximale de capacité de cellule de cent pour cent et dans lequel le système de charge pour bloc batterie lithium-ion est conçu pour charger le bloc batterie lithium-ion au deuxième régime de charge sans s'arrêter.

3. Système de charge pour bloc batterie lithium-ion selon la revendication 1, dans lequel les cellules lithium-ion individuelles de la pluralité de cellules lithium-ion ont une différence maximale de capacité de cellule de cent pour cent et dans lequel le système de charge pour bloc batterie lithium-ion est conçu pour charger le bloc batterie lithium-ion au deuxième régime de charge pendant une période de temps prédéfinie.

4. Système de charge pour bloc batterie lithium-ion selon la revendication 2, où le système de charge pour bloc batterie lithium-ion est conçu pour se mettre hors tension après la période de temps prédéfinie.

5. Système de charge pour bloc batterie lithium-ion selon la revendication 3, dans lequel le deuxième régime de charge est suffisant pour charger les cellules lithium-ion dans la période de temps prédéfinie.

6. Système de charge pour bloc batterie lithium-ion selon la revendication 5, dans lequel la période de temps prédéfinie n'est pas plus de deux heures.

7. Système de charge pour bloc batterie lithium-ion selon la revendication 1, dans lequel le dispositif de commande de chargeur est combiné de façon solidaire avec le chargeur.

8. Système de charge pour bloc batterie lithium-ion selon la revendication 1, dans lequel, en fonction de la différence de tension, le dispositif de commande de chargeur est conçu pour remplacer le premier régime de charge par le deuxième régime de charge.

9. Système de charge pour bloc batterie lithium-ion selon la revendication 1, dans lequel, en fonction du taux de variation de la différence de tension, le dispositif de commande de chargeur est conçu pour remplacer le premier régime de charge par le deuxième régime de charge.

10. Système de charge pour bloc batterie lithium-ion selon la revendication 1, dans lequel le dispositif de commande de chargeur est en outre conçu pour surveiller une température d'au moins une partie du bloc batterie lithium-ion et, en fonction au moins en partie d'au moins un parmi la différence de tension ou le taux de variation de la différence de tension et la température de l'au moins une partie du bloc batterie lithium-ion, remplacer le premier régime de charge par le deuxième régime de charge.

11. Système de charge pour bloc batterie lithium-ion selon la revendication 1, dans lequel le dispositif de commande de chargeur est en outre configuré pour surveiller une température d'au moins une partie du bloc batterie lithium-ion et calculer un taux de variation de la température de l'au moins une partie du bloc batterie lithium-ion et en fonction au moins en partie d'au moins un parmi la différence de tension ou le taux de variation de la différence de tension et le taux de variation de la température de l'au moins une partie du bloc batterie lithium-ion, remplacer le premier régime de charge par le deuxième régime de charge.

12. Système de charge pour bloc batterie lithium-ion selon la revendication 1, dans lequel la navette redox comprend du 1,4-di-t-butyl-2,5-diméthoxybenzène et dans lequel la composition d'électrolyte comprend du carbonate d'éthylène, du carbonate de diéthyle, du carbonate d'éthyl-méthyle et de l'hexafluorophosphate de lithium.

13. Dispositif comprenant le système de charge pour bloc batterie lithium-ion selon la revendication 1.

14. Dispositif selon la revendication 13, dans lequel la navette redox comprend du 1,4-di-t-butyl-2,5-diméthoxybenzène et dans lequel la composition d'électrolyte comprend du carbonate d'éthylène, du carbonate de diéthyle, du carbonate d'éthyl-méthyle et de l'hexafluorophosphate de lithium.
